# EUROPEAN PATENT APPLICATION

(11) **EP 3 216 766 A1**
(43) Date of publication of application: **13.09.2017**
(21) Application number: 15857837.7
(22) Date of filing: 05.08.2015
(51) Int. Cl.: C02F 1/00, C02F 1/42, C25B 9/00, C25B 9/02, C25B 9/04, E04H 4/00, E04H 4/14, E04H 4/16, F03B 13/00, F03B 13/08, F03B 13/10

(54) **AUTOMATICALLY ACTIVATED SELF-IONISING DEVICE OPERATING BY MEANS OF MECHANICAL KINETIC ENERGY, PROVIDED WITH A SYSTEM FOR PURIFYING WATER BY MEANS OF IONISATION, FOR SWIMMING POOLS FOR HOME OR PUBLIC USE OR SIMILAR**

(30) Priority: 05.11.2014 CL 20142995
(71) Applicant: Sepúlveda Fuentes, Cesar Enrique, Quilpué, Codigo Postal 2430000 (CL)
(72) Inventor: Sepúlveda Fuentes, Cesar Enrique, Quilpué, Codigo Postal 2430000 (CL)
(74) Representative: Lorente Berges, Ana
(86) International application number: PCT/CL2015/000040
(87) International publication number: WO 2016/070296

(57) **Abstract**

The invention refers to a system to ionize water through electrolysis for pools that function with kinetic-mechanical energy of the water thrust from the filtration system of a pool. The invention refers to a system to ionize pool or pond water by electrolysis, such pools or ponds must be provided with a system for the circulation of water. The system is easily installed in all types of pools without affecting their original character and is used as an autonomous and safe source of energy; the electric force is obtained from the kinetic energy accumulated in the water, product of the impulsion system to filter the pool water. This energy is used both to generate electricity, used in the production of ions by electrolysis, and as a source to indicate operation. The kinetic energy is also used as a source of energy for the drive element of the electrode cleaner.

## Description

### Antecedents of the invention

The invention is about an auto ionizer that is activated automatically, which functions with kinetic-mechanical energy of the water, provided with a system of water purification through ionization for pools of domestic, public, or semipublic use. The purification system is autonomous with a generator in its interior and a copper or copper silver alloy rod to ionize the water.

It has a single method of self-cleaning that is mechanical-kinetic, which is capable of cleaning the electrodes at the moment water passes through a duct.

This application refers to an auto ionizer to generate metal ions, of the type, copper, copper-silver, or other metals that are beneficial for the control of organic water life, and can also be used as separators by decantation or flocculation of organic particles, or not, that can be found in suspension in the pool or tank water, for its use in ducts that transport fluids, such as in pools, water storage tanks, whether they be for human or industrial consumption, and more particularly, but not exclusively, for recreation pools, directly or indirectly for the elimination of pathogen agents and organic life present in the chemistry of the water such as algae, fungi, viruses, and bacteria present in the water.

### State of the Art

There are many types of ionizers for pools, which require a source of electric energy, capable of producing the electrolysis effect, through which by the use of two electrodes, anode and cathode, which on passing an electrical current of the continuous current type, produces by a potential difference the transfer of electrons from one molecule to the next, thus generating a metallic ion (colloid), which stays suspended in the water, and then by the capacity peculiar to
There are many types of ionizers for pools, which require a source of electric energy, capable of producing the electrolysis effect, through which by the use of two electrodes, anode and cathode, which on passing an electrical current of the continuous current type, produces by a potential difference the transfer of electrons from one molecule to the next, thus generating a metallic ion (colloid), which stays suspended in the water, and then by the capacity peculiar to metals, affects the life of living organisms, such as fungi, viruses, bacteria, and algae.

The most common models are available in the market are of the electric type, patent reference US5364512 A. Being the electricity supplied from a source dependent on the domestic energy from the house or outbuilding.

Other models also exist like the solar ionizers, which receive the energy from the sun that is captured by a photovoltaic cell. Other known models incorporate cells or batteries, as can be seen in patent N° US5059296 A; less common are other alternatives where the kinetic energy is used.

This equipment offers a solution to these problems, with an in-line system installed in the return pipes of the conventional filtration system, which takes advantage of the flow of circulating water by a hydroelectric generator, which transforms the kinetic energy of the water into electric energy producing electricity in alternating current which is rectified transforming it into continuous current to make it circulate through the electrodes of copper silver, (anode and cathode), to thus produce the ionization of the same. Reference Patent US20090188788 A1, this patent refers to a chlorination system and is found inside of the pool or tank; nothing refers to a cleaning or an ionization system by metallic colloids.

This invention, consists of an ionization chamber called electrolytic cell, inside which, is a hydraulic generator and the electrodes, one or both of copper, copper-silver alloy, and the other of stainless steel. The equipment has an automatic cleaning system based on the use of the water's kinetic energy. The equipment has a regulator to control the power of the ionization and an LED operation indicator.

One of the principal benefits of this system of ionization is that it is self-cleaning, meaning it does not require periodic maintenance except to change the electrodes to control the power of ionization. Another of the principal benefits of the equipment is, as explained before, its energy autonomy, as it takes advantage of the kinetic potential of the hydraulic fluid to generate electricity. In addition to the aforementioned, we can add that the equipment is environmentally friendly, be it an ecosystem or residential environment, due to the equipment not leaving any type of toxic or harmful residue. This device is installed directly on the return line, relying for this on a suitable device, so this way it is enough to insert it directly into the pipeline, preferably of the return of the filtered water, for this reason this device does not require electrical connections, nor electrical personnel for its installation.

The invention refers to a system to ionize the water using metals. This system is defined as automatic, as it is activated when there is flow into the interior of the pipe that supports it, and it is shut off when circulation in the pipe ceases to exist. The equipment is thus, depending for its operation on the activation of the system of impulsion of the filtration equipment.

It also includes a device that is activated automatically to clean the electrodes in the moment that a flow exists in the interior of the pipes. This element is activated at the passing of the water stream, consists of a strip of a flexible material which, when water passes, it oscillates with serpentine movements, scraping the residual formations produced by the ionization between the anode and the cathode.

The system includes a signaler light activation system which is connected to the same source of electricity generation.

To install this system no type of modifications are required in the structure or basin of the pool, it is sufficient to insert it into the return line of the discharge pipe in the filtration system of a pool.

### SUMMARY

The invention refers to a system to ionize water through electrolysis for pools that function with kinetic-mechanical energy of the water thrust from the filtration system of a pool. The invention refers to a system to ionize pool or pond water by electrolysis, such pools or ponds must be provided with a system for the circulation of water. The system is easily installed in all types of pools without affecting their original character and is used as an autonomous and safe source of energy; the electric force is obtained from the kinetic energy accumulated in the water, product of the impulsion system to filter the pool water. This energy is used both to generate electricity, used in the production of ions by electrolysis, and as a source to indicate operation. The kinetic energy is also used as a source of energy for the drive element of the electrode cleaner.

### Brief Description of the Figures

To better understand the invention of the auto ionizer in line for the purifying of water, we will describe it in function to the figures that form an integral part of this invention, without this restricting it to obvious modifications that may arise, where:
Figure 1 shows a lateral elevation view of the auto ionizer.
Figure 2 shows a right side view of the auto ionizer of the invention.
Figure 3 shows a left side view of the auto ionizer of the invention.
Figure 4 shows a cross-sectional view A-A in lateral elevation of the auto ionizer of the invention.
Figure 5 shows a cross-sectional view B-B in lateral elevation of the auto ionizer of the invention.
Figure 6 shows a side elevation view of another realization or model of the auto ionizer of the invention.
Figure 7 shows a rear view of the auto ionizer where the insulating part of an anode and cathode can be seen.
Figure 8 shows a side elevation view of the typical assembly of a return line of a pool, of the auto ionizer of figure 6, for the purification of water corresponding to the invention.

### Description of the Invention

### Embodiment 1

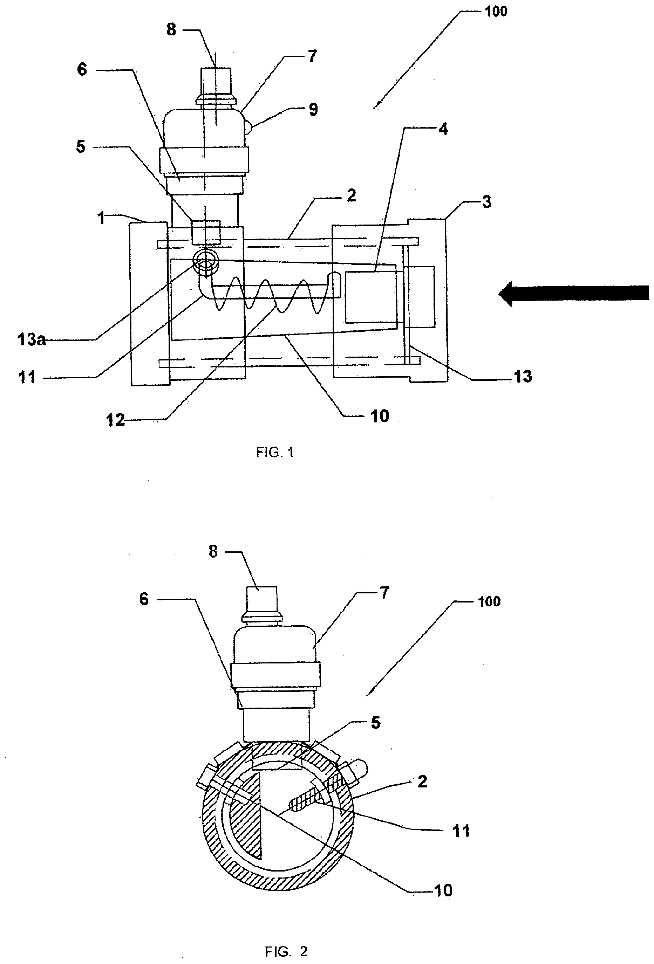

According to figures 1 through 5 the auto ionizer (100) doted of a system to purify the water in pools or similar, is formed by some threaded couplings (1) and (3), which when installed in a pipeline (14) of the pool's filtration system (17), precisely in the return of the filtered water to the pool, when there is circulation of water, the system is activated automatically activating an electric generator (4) with an independent support (13); between the said threaded couplings (1) and (3), is found solidary to a transparent body (2), allowing to be seen in the interior the operation of each of the means of the auto ionizer (100); when said electric generator (4) is submitted to the flow of water, this produces electricity, the which activates by electrolysis an anode (10) and a cathode (11), which are of copper, or a copper-silver alloy, or of silver, or of another beneficial metal, provided with longitudinal or transversal ribbing, which free a charge of ions that activate an LED operation indicator (9); in addition, said auto ionizer (100) is provided with a kinetic-mechanical cleaner (12) in charge of cleaning the electrodes, which is found supported in the cathode (11) and consists of a helical tape covering said cathode (11); the auto ionizer (100) is assembled in such a way it contains all the necessary elements, without requiring any other peripheral for its operation, besides, it relies on a hermetic sealing, for this a connector (5) is its connecting element between the coupling (1) and a coupling (6) which has in its interior a means of electrical control, which at the same time is connected to a power control receptacle (7) of a power controller, a potentiometer (8) and the LED operation indicator (9).

The auto ionizer (100) that constitutes an electrolytic cell, that through the threaded couplings (1) and (3) can be easily installed in the line of the return pipes (14) of every pool or pond that relies on a system of impulsion and/or purification by re-circulation, this system of re-circulating or filtering of water (16), will activate the whole unit of the auto ionizer (100) only when there is a flow of water (16), and said flow of water (16) will exist every time that the filtration system is activated, so that when the system shuts off, so will said auto ionizer (100) cease to function, by which it is defined as an automatic auto ionizer. Said flow of water (16) will activate the electric generator (4), which will feed a pair of electrodes, anode (10) and cathode (11) that by electrolysis will free ions into the pool water, and an operation indicator light will activate (9) and also to activate the automatic-kinetic electrode's cleaner (12). The auto ionizer (100) eliminates undesirable organic materials from the water, such as bacteria, viruses, algae, and fungi, among other organisms that live, or have a tendency to live and reproduce in the pool water, through the metallic ionization of copper or copper-silver or other beneficial metal, is achieved the elimination of a high percent of these organisms, besides acting as a flocculant and/or decanter, as the colloid particles of the metals, have an electrical charge, then an attraction with the elements of opposite charge is produced, also these metallic particles have the ability to produce decantation as they are much more heavier than water, as a reference a liter of copper masses more than 8 kg, and a liter of water only masses one kilogram.

The aforementioned is provided for purposes of illustrating, explaining, and describing embodiments of the present invention. The modifications and adaptations to these embodiments will be evident for the experts in the art and can be carried out without departing from the scope or spirit of the invention.

### Embodiment 2

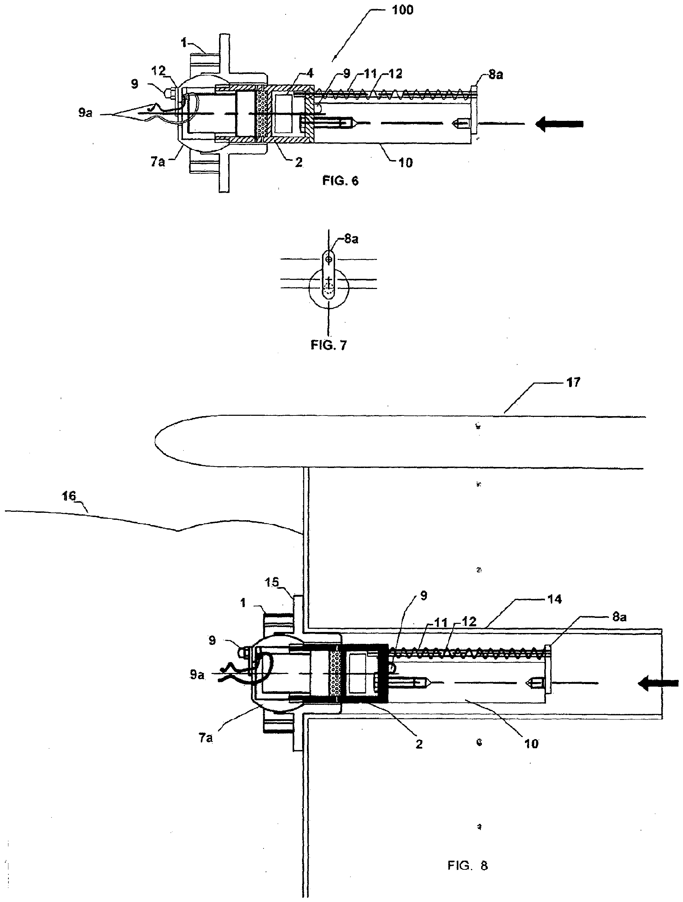

According to figures 6, 7, and 8, the auto ionizer (100) water purifier, consists in a device that is installed in a return nozzle (15) existent in every pool that relies on a system of recirculation or filtration of water, which allows the flow to activate the electric generator (4) of the device (100), and this in turn feeds a pair of electrodes, an anode (10) and a cathode (11) which by electrolysis frees ions into the pool water, and for an operation indicator light (9). Thus also to activate a kinetic-automatic electrode's cleaner (12) and a visual kinetic activation signal (9a). The auto ionizer (100) eliminates undesirable pathogens from the water in pools, ponds, or other, by metallic ionization of copper or copper-silver or another beneficial metal, and illuminates the stream of water proving its correct operation; besides, the auto ionizer (100) has an insulating body (8a) of contact between the anode (10) and the cathode (11) and in one of its ends a return ball (7a) where a flow controller is available (12a).

The device (100) is able to eliminate a high percent of these organisms, besides acting as a flocculant and/or decanter, as the colloid particles of the metals, have an electrical charge, then an attraction is produced with the elements that have an opposite charge, also these metallic particles have the ability to produce decantation as they are much more heavier than water, as reference a liter of copper masses more than 8 kg, and a liter of water only masses one kilogram.

## Claims

1. Automatic auto ionizer that functions with kinetic-mechanical energy of water thrust from the filtration system of pools, equipped with an ionization system by an electrolytic cell with beneficial metallic electrodes, able to eliminate organic biological substances contained in pool water, arranged either separately or jointly in a single unit of assembly in the interior of the return line of pools, CHARACTERIZED because the auto ionizer is comprised of some threaded couplings (1) and (3), which when installed in an existing pipeline of the filtration system of the pool (17), precisely in the return of the filtered water to the pool (17), when there is circulation of water the system is activated automatically activating an electric generator (4); between said couplings (1) and (3), is found solidary to a transparent body (2), allowing to see in the interior the operation of each of the means; when the generator (4) is submitted to the flow of water, this produces electricity which activates by electrolysis some electrodes, an anode (10) and a cathode (11), freeing a load of ions, and activating an LED operation indicator (9) and a kinetic-mechanical cleaner (12) in charge of cleaning the electrodes, the which is supported on the cathode (11); the auto ionizer (100) is assembled in a way it contains all the necessary elements , without requiring any other peripheral for its operation, it has a hermetic sealing, for this the connector (5) is the connecting element between the threaded coupling (1) and a coupling with an electric control means (6) that is the power control receptacle of a potentiometer (8) and the LED operation indicator (9).

2. The auto ionizer supplied with an ionization system by and electrolytic cell with metallic electrodes, according to claim 1, CHARACTERIZED because the electric generator (4) is installed with an independent support (13).

3. The in-line auto ionizer supplied with a system of ionization by an electrolytic cell with metallic electrodes, according to claim 1, CHARACTERIZED because the cathode (11) has a threaded connection (13a) toward the exterior, where it receives the electric feed isolated from the flow of water (16).

4. The auto ionizer supplied with a system of ionization by an electrolytic cell with metallic electrodes, according to claim 1, CHARACTERIZED because the connector (5) is a connector that connects the threaded coupling (1) with the coupling that has the means of electrical control (6) which in turn is connected to a power control receptacle (7) of the power control, potentiometer (8), by means of this is connected the control system to the electric feed coming from the generator (4), inside are included the wave rectifying elements where the current coming from the generator (4) of current is transformed, rectifying it and transforming it into continuous current, which is dispensed through the power control, potentiometer (8), which feeds the LED operation indicator (9), and then feeds the anode (10) and the cathode (11).

5. The auto ionizer supplied with a system of ionization by an electrolytic cell with metallic electrodes, according to claim 1, CHARACTERIZED because the auto ionizer (100), is automatically activated by the flow of water.

6. The auto ionizer supplied with a system of ionization by an electrolytic cell with metallic electrodes, according to claim 1, CHARACTERIZED because it has a controller of production (7) of ions by the power control, potentiometer (8).

7. The auto ionizer supplied with a system of ionization by an electrolytic cell with metallic electrodes, according to claim 1, CHARACTERIZED because the anode (10) and the cathode (11) have longitudinal ribbing.

8. The auto ionizer supplied with a system of ionization by an electrolytic cell with metallic electrodes, according to claim 1, CHARACTERIZED because the kinetic cleaner (12), consists of a helical tape that covers the full length of the cathode (11).

9. The auto ionizer supplied with a system of ionization by an electrolytic cell with metallic electrodes, according to claim 1, CHARACTERIZED because the auto ionizer has a visual kinetic activation signal (9a).

10. The auto ionizer supplied with a system of ionization by an electrolytic cell with metallic electrodes, according to claim 1, CHARACTERIZED because the auto ionizer has an insulator (8a) which allows it to insulate all contact between the anode (10) and the cathode (11).

11. The auto ionizer supplied with a system of ionization by an electrolytic cell with metallic electrodes, according to claim 1, CHARACTERIZED because the auto ionizer has on one of its ends a return ball (7a) with a flow controller (12a).

12. The auto ionizer supplied with a system of ionization by an electrolytic cell with metallic electrodes, according to claim 1, CHARACTERIZED because the anode (10) and the cathode (11) are of copper or a copper-silver alloy or another beneficial metal, whose bodies are supplied with longitudinal or transversal ribbings.
